# EUROPEAN PATENT APPLICATION

(11) **EP 1 589 639 A1**
(43) Date of publication of application: **26.10.2005**
(21) Application number: 05252140.8
(22) Date of filing: 06.04.2005
(51) Int. Cl.: H02K 21/22

(54) **Improved multipolar magnetogenerator charging system**

(30) Priority: 13.04.2004 US 823212
(71) Applicant: R.E. Phelon Company, Inc., Aiken, South Carolina 29802 (US)
(72) Inventor: Walker, James M. of, Fond du Lac Wisconsin 54937 (US)
(74) Representative: Lawrence, John

(57) **Abstract**

A magneto charging system (42) consisting of a stator (52) with a plurality of pole (56) pairs and a rotor (44) consisting of a plurality of magnet (46) pole pairs. Where the number of magnet (46) pole pairs and the size of the magnets (46) are used to limit the current output of the stator (52).

## Description

### BACKGROUND OF THE INVENTION

The present invention relates to alternators and in particular to a permanent magnet alternator in which the output stator current can be limited by increasing the number of magnet pole pairs.

The electrical system of a small internal combustion engine typically comprises an ignition system and a charging system. If the system does not include a battery, an alternator of the electrical system operates like a generator (magneto), generating AC power as long as the engine is running. If the system includes a battery, a rectifier is coupled to the alternator to convert AC power to DC power so that it can be stored in the battery and used to supply power to accessories even when the engine is not running.

The alternator generates and delivers the electrical power to the internal combustion engine. The alternator typically includes a stator and a rotor. The stator generally includes a plurality of windings wound around a plurality of poles extending outwardly from a core. The stator is mounted under the rotor with the rotor having a plurality of magnets mounted to the inside surface of the sidewall of the rotor. Rotation of the rotor creates a magnetic field and induces a current in the windings of the stator.

Permanent magnet charging systems for small internal combustion engines are well known in the art. There are several methods of controlling or limiting the output charging current of the stator. Present methods of limiting the current output of the stator include reducing the size and flux of the magnets mounted to the rotor. One of the downfalls of reducing the magnetic flux is that at lower engine speeds, such as idle (1000 RPMs), the charging system does not provide enough output to power all the electrical accessories that may be part of an electrical system. Another method of reducing the charging system output is to increase the number of windings on the stator, therefore increasing the inductance of the stator and reducing the current output. Inductance is a measure of the voltage rise with time when an amount of current is applied to a conductor. By increasing the inductance, the current cannot rise to as high a value with the same time changing magnetic field. One problem with limiting the current output of the charging system in this manner is the increase in direct current (DC) resistance of the stator when using equivalent wire gauges for the windings. The increase in resistance can create an operating temperature that is over the maximum operating temperatures of the other materials needed in the manufacture of the charging system, therefore creating a charging system that is unreliable. To decrease the resistance of the stator requires increasing the cross sectional area of the wire, which means using a larger gauge wire. Using a larger wire gauge is not always possible because of limitations of the area in which the charging system is to be installed. The larger wire gauge may also create problems in manufacturing the stator, such as being able to wind the heavier gauge wire on the insulating material of the stator, or just being able to form the heavy gauge wire around the stator pole fingers. These problems can also all be dealt with in one manner or another, but in almost all cases, it adds to the manufacturing costs of the stator, therefore increasing the costs of the charging system.

Accordingly, a need exists for a charging system that is more reliable and more cost effective than prior art charging systems and limits the output charging current of the stator by increasing the number of magnet pole pairs of the rotor.

### SUMMARY OF THE INVENTION

The increase in the number of magnet pole pairs and the size of the magnets are used to limit the current output of the charging system. The present invention comprises a permanent magnet alternator in which the output stator current can be limited by increasing the number of magnet pole pairs of the charging system.

The multiple pole charging system of the present invention includes a rotor with a plurality of permanent magnets mounted to the inside surface of the sidewall of the rotor at equally spaced angular intervals. The magnets are circumferentially arranged and magnetized in the radial direction with alternating north and south polarities. The magnets are affixed to the inside surface of the rotor sidewall by an epoxy or other fastening means. The charging system also comprises a stator mounted under the rotor. The stator includes a central core with a plurality of poles extending outwardly from the periphery of the core. The poles each having a radially extending member extending outwardly from the central core and an end member located at the end of the radially extending member. Each end member having a length larger than the width of the radially extending member. At least one length of wire is wound around the radially extending members of the poles of the stator to comprise windings. An air gap exits between the end members and the magnets to allow rotation of the rotor around the stator. Rotation of the rotor around the stator creates a changing magnetic field in the stator poles and induces a current in the windings of the stator. The arc length of each of the magnets is dependent on the amount of flux output needed for the charging system.

The stator of the multiple pole charging system can comprise a plurality of different pole configurations, including different numbers of poles, different lengths of poles, and axially and/or radially extending poles.

The charging system of the present invention can be incorporated into a plurality of different power equipment or vehicles which require battery charging and/or electrical power generation.

The present invention also provides a method of limiting the current output of a charging system without having to increase the windings on the stator or decreasing the magnetic flux. The present invention provides a plurality of magnet poles to limit the stator current output. Increasing the number of magnet poles in the rotor increases the frequency of which the magnetic field is changing in the charging system relative to the engine RPM. The faster changing magnetic field does not allow the induced current in the stator to rise to as high a value as the engine RPM increases.

Various other features, objects, and advantages of the invention will be made apparent to those skilled in the art from the following detailed description, claims, and accompanying drawings.

### BRIEF DESCRIPTION OF THE DRAWINGS

FIG. 1 is a bottom plan view of a prior art stator and rotor assembly of a prior art charging system; and
FIG. 2 is a bottom plan view of an embodiment of a stator and rotor assembly of a multiple pole charging system of the present invention.

### DETAILED DESCRIPTION OF THE INVENTION

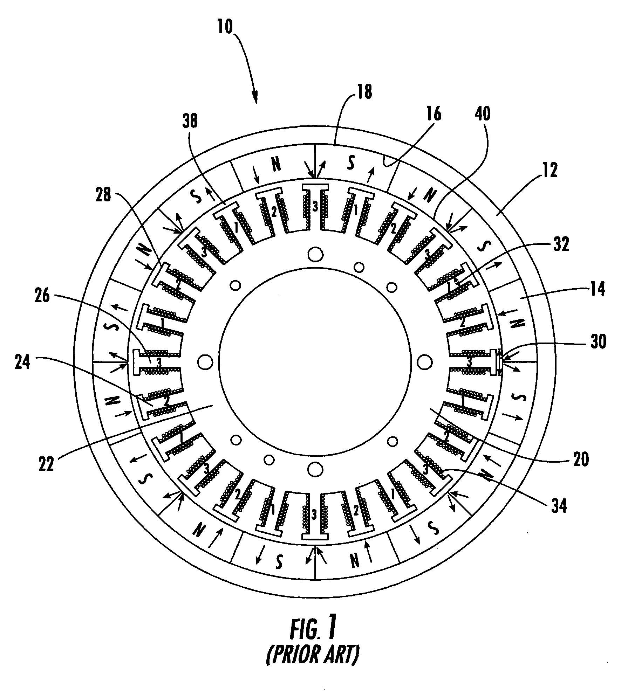

Referring now to the drawings, FIG. 1 is a bottom plan view of a prior art alternator charging system 10. This prior art charging system 10 includes a rotor 12 with a plurality of permanent magnets 14 fixed to the inside surface 16 of the sidewall 18 of the rotor 12 at equally spaced angular intervals. Each magnet 14 is magnetized in the radial direction with opposite polarities. The prior art charging system 10 also includes a stator 20 mounted under the rotor 12. The stator 20 having a central core 22 with a plurality of poles 24 extending outwardly from and circumferentially arranged around the central core 22. The poles 24 are preferably spaced-apart with the same polar pitch as the magnets 14. The poles 24 each having a radially extending member 26,extending outwardly from the central core 22 and an end member 28 located at the end of the radially extending member 26. Each end member 28 having a length 30 larger than the width 32 of the radially extending member 26. A plurality of windings 34 are wound around the radially extending members 26 of the poles 24 of the stator 20. At least one length of wire is wound around the poles 24 of the stator 20 to comprise the windings 34. An air gap 38 exits between the end members 28 and the magnets 14 to allow rotation of the rotor 12 around the stator 20. Rotation of the rotor 12 and the plurality of permanent magnets 14 mounted to inside surface 16 of the rotor's sidewall 18 around the stator 12 creates a changing magnetic field and induces a current in the windings 34 of the stator 20. The arc length 40 of each of the magnets 14 is larger than the length 30 of the end members 28 of the stator poles 24.

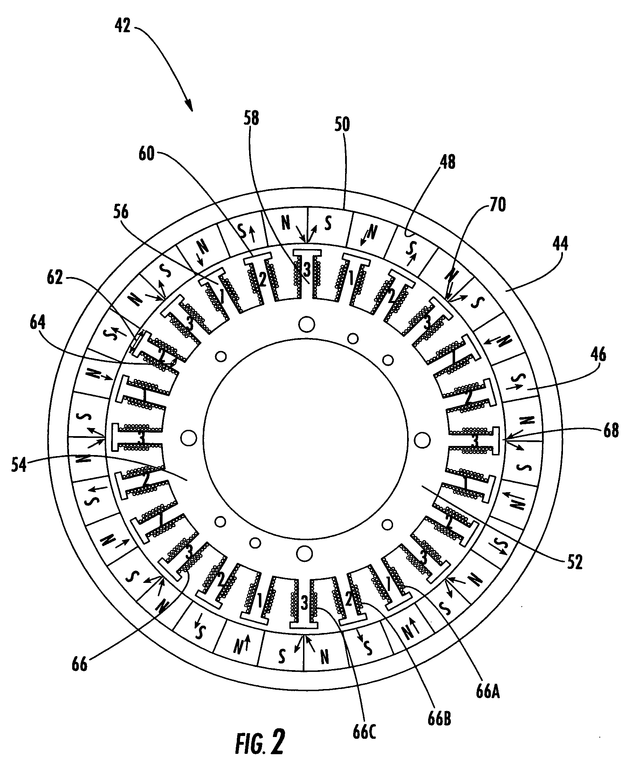

The present invention comprises a permanent magnet alternator in which the output stator current can be limited by increasing the number of magnet pole pairs of the charging system. FIG. 2 is a bottom plan view of a multiple pole charging system 42 of the present invention. The charging system 42 comprises a rotor 44 with a plurality of permanent magnets 46 fixed to the inside surface 48 of the sidewall 50 of the rotor 44 at equally spaced angular intervals. The magnets 46 are circumferentially arranged and magnetized in the radial direction with alternating north and south polarities. The magnets 46 are secured to the inside surface 48 of the rotor sidewall 50 by an adhesive.

The charging system 42 also comprises a stator 52 mounted under the rotor 44. The stator 52 is preferably comprised of a stack of laminations. The stator 52 includes a central core 54 with a plurality of poles 56 extending outwardly from the periphery of the central core 54. The poles 56 are circumferentially arranged around the periphery of the central core 54. The periphery of the core 54 and the poles 56 are preferably electrically insulated from the central core 54 by an insulating material. The poles 56 are preferably spaced-apart with the same polar pitch as the magnets 46. The poles 56 each having a radially extending member 58,extending outwardly from the central core 54 and an end member 60 located at the end of the radially extending member 58. Each end member 60 having a length 62 larger than the width 64 of the radially extending member 58. A plurality of windings 66 are wound around the radially extending members 58 of the poles 56 of the stator 52. At least one length of wire is wound around the poles 56 of the stator 52 to comprise the windings 66. The charging system 42 is preferably a three-phase charging system that includes three windings 66A, 66B, 66C wound around the stator poles 56. Each of the three windings 66A, 66B, 66C is wound around every third pole. A first winding 66A is wound on every third pole, a second winding 66B is wound on the next open poles and a third winding 66C is wound on the last open poles. An air gap 68 exits between the end members 60 and the magnets 46 to allow rotation of the rotor 44 around the stator 52. Rotation of the rotor 44 and the plurality of permanent magnets 46 mounted to inside surface 48 of the rotor's sidewall 50 around the stator 52 creates a magnetic field and induces a current in the windings 66 of the stator 52. The arc length 70 of each of the magnets 46 is dependent on the flux needed for the desired output.

The stator of the charging system can comprise a plurality of different pole configurations, including different numbers of poles, different lengths of poles, and axially and/or radially extending poles. Therefore, the stator of the present invention can have any number of poles, poles of different lengths, and axially and/or radially extending poles.

The charging system of the present invention can be incorporated into a plurality of different power equipment or vehicles that require battery charging and/or electrical power generation, such as lawn mowers, ATVs, snowmobiles, personal watercraft, motorcycles, power generators, etc.

The present invention also provides a method of limiting the current output of a charging system without having to increase the windings on the stator or decreasing the magnetic flux. The present invention provides a plurality of magnet poles to limit the stator current output. Increasing the number of magnet poles in the rotor increases the frequency of which the magnetic field is changing in the charging system relative to the engine RPM. The faster changing magnetic field does not allow the induced current in the stator to rise to as high as a value as the engine RPM increases.

The charging system of the present invention provides many advantages that might not be readily apparent. Some of these advantages include: 1) The increase in the number of magnet poles increases the frequency of the changing magnetic field which helps to limit the current to lower values at higher engine RPMs. 2) Increasing the magnet frequency also allows for fewer turns on the stator. 3) Fewer windings on the stator allows for larger wire gauges to be used in the manufacture of the stator, helping to reduce temperatures. 4) Fewer windings on the stator allow the stator to be manufactured at a lower cost. 5) Reduced peak currents can be obtained by increasing the number of magnet poles since the current through the stator does not rise to as high of values. 6) Reducing the current with multiple magnet poles can prolong the life of the connectors. 7) Lower torque is required for rotation of the rotor when increasing the pole count. 8) Lower operating temperatures of the charging system provide for a more reliable charging system. 9) When using rare earth magnets, the number of laminations can also be reduced by increasing the number of magnet poles. 10) Going to a plurality of magnet poles can be done with all types of magnetic materials, including Ceramic, Neodymium, Samarium-Cobalt and Alnico.

While the invention has been described with reference to preferred embodiments, it is to be understood that the invention is not intended to be limited to the specific embodiments set forth above. Thus, it is recognized that those skilled in the art will appreciate that certain substitutions, alterations, modifications, and omissions may be made without departing from the spirit or intent of the invention. Accordingly, the foregoing description is meant to be exemplary only, the invention is to be taken as including all reasonable equivalents to the subject matter of the invention, and should not limit the scope of the invention set forth in the following claims.

## Claims

1. An alternator of a charging system (42) comprising:
a rotor (44) with a plurality of permanent magnets (46) mounted to the inside surface (48) of the sidewall (50) of the rotor (44);
a stator (52) mounted under the rotor (44), the stator (52) including a central core (54) with a plurality of poles (56) extending radially outwardly from the periphery of the core (54), the poles (56) each having a radially extending member (58) extending outwardly from the central core (54) and an end member (60) located at the end of the radially extending member (58);
a plurality of windings (66) wound around the radially extending member (58) of the stator (52);
an air gap (68) between the end members (60) and the magnets (46) to allow rotation of the rotor (44) around the stator (52) creating a magnetic field and inducing a current in the windings (66) of the stator (52);
wherein each of the magnets (46) have an arc length (70) that is dependent on the flux needed for the desired output.

2. The alternator of claim 1 wherein the magnets (46) are circumferentially arranged and magnetized in the radial direction with alternating north and south polarities.

3. The alternator of claim 1 or claim 2 wherein the magnets (46) are affixed to the inside surface (48) of the rotor sidewall (50) by an adhesive or other fastening means.

4. The alternator of any one of claims 1 to 3 wherein the windings (66) include three wires (66A, 66B, 66C) wound around the stator poles (56) for a three phase charging system.

5. The alternator of claim 4 wherein the windings (66) include a first winding (66A) wound around every third pole, a second winding (66B) wound around the next open poles and a third winding (66C) wound around the last open poles.

6. The alternator of any preceding claim wherein the increase in the number of magnet poles (56) increases the frequency of the changing magnetic field which helps to limit the current to lower values at higher engine RPMs.

7. The alternator of any preceding claim wherein the increase in the number of magnet poles (56) allows for fewer windings (66) on the stator (52).

8. The alternator of claim 7 wherein the fewer windings (66) on the stator (52) allows for larger wire gauges to be used in the manufacture of the stator (52), helping to reduce temperatures.

9. The alternator of claim 7 wherein the fewer windings (66) on the stator (52) allow the stator (52) to be manufactured at a lower cost.

10. The alternator of any preceding claim wherein the increase in the number of magnet poles (56) reduces peak currents in the stator (52).

11. The alternator of claim 10 wherein the reduced current prolongs the life of the connectors of the alternator.

12. The alternator of any preceding claim wherein the increase in the number of magnet poles (56) reduces the torque required to turn the rotor (44).

13. The alternator of any preceding claim wherein the increase in the number of magnet poles (56) results in lower operating temperatures of the alternator making the alternator more reliable.

14. The alternator of any preceding claim wherein the increase in the number of magnet poles (56) reduces the number of laminations of the stator (52) when using rare earth magnets.

15. The alternator of any preceding claim wherein the increase in the number of magnet poles (56) can be done with all types of magnetic materials, including Ceramic, Neodymium, Samarium-Cobalt and Alnico.

16. The alternator of any preceding claim wherein the stator (52) is made from a plurality of steel laminations.

17. A permanent magnet charging system (42) in which the output can be limited by increasing the number of magnet poles pairs comprising:
a rotor (44) with a plurality of permanent magnets (46) mounted to the inside surface (48) of the rotor (44);
a stator (52) mounted under the rotor (44), the stator (52) including a central core (54) with a plurality of poles (56) extending radially outwardly from the periphery of the core (54), the poles (56) each having a radially extending member (58) extending outwardly from the central core (54) and an end member (60) located at the end of the radially extending member (58);
a plurality of windings (66) wound around the radially extending member (58) of the stator (52), wherein a first winding (66A) is wound around every third pole, a second winding (66B) is wound around the next open poles and a third winding (66C) is wound around the last open poles;
an air gap (68) between the end members (60) and the magnets (46) to allow rotation of the rotor (44) around the stator (52) creating a magnetic field and inducing a current in the windings (66) of the stator (52); and
wherein each of the magnets (46) have an arc length (70) that is approximately equal to the length of the end members (60) of the poles (56).

18. The charging system (42) of claim (17) wherein the charging system (42) can be incorporated into a plurality of different power equipment and vehicles which requires battery charging or electrical power generation.

19. A method for controlling or limiting the output charging current of a charging system (42), the method comprising the steps of:
mounting a stator (52) under a rotor (44) , the rotor (44) having a plurality of permanent magnets (46) mounted to an inside surface (48) of a sidewall (50), the stator (52) having a central core (54) with a plurality of poles (56) extending radially outwardly from the periphery of the core (54), the poles (56) each having a radially extending member (58) extending outwardly from the central core (54) and an end member (60) located at the end of the radially extending member (58);
winding at least one length of copper wire around plurality of windings (66) around the radially extending members (58) of the stator (52);
rotating the rotor (44) around the stator (52) to create a changing magnetic field and induce a current in the windings (66) of the stator (52); and
increasing the number and reducing the size of the magnets (46) to reduce the output charging current from the winding (66) on the stator (52).
